Europäisches Patentamt

European Patent Office

Office européen des brevets

(19)

(11) Veröffentlichungsnummer: **0 212 398**
**A2**

(12) **EUROPÄISCHE PATENTANMELDUNG**

(21) Anmeldenummer: 86110682.1

(22) Anmeldetag: 01.08.86

(51) Int. Cl.⁴: **H04Q 1/457**

(30) Priorität: 21.08.85 DE 3529906

(43) Veröffentlichungstag der Anmeldung:
04.03.87 Patentblatt 87/10

(84) Benannte Vertragsstaaten:
AT BE CH DE FR GB IT LI NL SE

(71) Anmelder: Siemens Aktiengesellschaft Berlin
und München
Wittelsbacherplatz 2
D-8000 München 2(DE)

(72) Erfinder: Wasserthal, Edmund, Dipl.-Ing. (FH)
Malerwinkel 4
D-8000 München 71(DE)

(54) Verfahren zur Erkennung von Mehrfrequenzcodesignalen mit überlagerten Störsignalen.

(57) Die digitalisierten Mehrfrequenzsignale werden mittels digitaler Filter in die unterschiedlichen Frequenzsignale getrennt und deren Empfang über Frequenzdetektoren festgestellt. Anschließend werden die Signale digital integriert und auf einen Maximal- und Minimalwert begrenzt. Während des Durchlaufens der integrierten Signale durch einen definierten Wertebereich wird wenigstens ein Markierungsimpuls erzeugt. Die Anzahl der Integrations-Zeitintervalle und der Beginn des vorgegebenen Wertebereiches bestimmen die Erkennungszeit eines Mehrfrequenzzeichens. Liegen innerhalb eines Intergrations-Zeitintervalles Markierungsimpulse vor, wird untersucht, inwieweit die empfangene Frequenzkombination mit einem entsprechend codierten Mehrfrequenzsignal übereinstimmt und das erkannte Mehrfrequenzzeichen an die weiterverarbeitenden Einrichtungen weitergeleitet. Unterschreiten die der erkannten Mehrfrequenzkombination zugeordneten integrierten Signale einen vorgegebenen Wert, so wird das Zeichenende erkannt.

FIG 1

## Verfahren zur Erkennung von Mehrfrequenzcodesignalen mit überlagerten Störsignalen

Die Erfindung betrifft ein Verfahren zur Erkennung von Mehrfrequenzcodesignalen mit überlagerten Störsignalen, bei dem die in eine Fernmeldeanlage eingehenden, digitalisierten Mehrfrequenzsignale mittels digitaler Filter entsprechend der Codierung in unterschiedliche Frequenzsignale getrennt werden und nachgeschaltete Frequenzdetektoren das Vorliegen von Frequenzsignalen feststellen.

Es ist bekannt, Signalisierungszeichen, die Fernmeldeanlagen untereinander oder mit Teilnehmereinrichtungen austauschen, durch eine Kombination mehrerer Frequenzen zu codieren. Vorzugsweise werden zwei Frequenzen, die jeweils einer Frequenzgruppe zugeordnet sind, gleichzeitig übertragen. Für den Empfang dieser Signalisierungszeichen wurden Mehrfrequenzempfänger mit digitalen Filtern eingesetzt, wie sie beispielsweise aus der DE-OS 22 08 367 bekannt sind. Hierbei ist je Frequenzgruppe ein digitales Hochpaß-bzw. Tiefpaßfilter und für jede Frequenz einer Frequenzgruppe ein Bandpaßfilter erforderlich. Ein jeweils nachgeschalteter Frequenzdetektor stellt fest, ob Signale der jeweiligen Frequenz mit ausreichend hohem Pegel empfangen werden und meldet dies einer Decodiereinheit, die, nachdem zwei Frequenzen eine vorgegebene Zeitdauer empfangen wurden, diese Frequenzkombination in ein Signalisierungszeichen umsetzt. Bisher wurden diese Mehrfrequenzempfänger in Fernmeldenetzen eingesetzt, bei denen die Signalisierungsphase und die anschließende Kommunikationsphase zeitlich getrennt abliefen, so daß sich Sprachsignale aufgrund der Sprachunterdrückungsdmaßnahmen während der Signalisierungsphase nur mit geringem Pegel den Frequenzsignalen überlagerten. Die in neuerer Zeit eingeführten Dienste in Fernmeldenetzen bieten jedoch Leistungsmerkmale, die das Erkennen von Steuerzeichen und damit spezieller Signalisierungszeichen während der Kommunikationsphase in den Fernmeldeanlagen erfordern.

Der vorliegenden Erfindung liegt die Aufgabe zugrunde, ein Verfahren anzugeben, das ausgehend von den bekannten Mehrfrequenzempfangsverfahren Mehrfrequenzsignale trotz überlagerter Störsignale bzw. Sprachsignale innerhalb eines vorgegebenen Zeitraums erkennt.

Die Lösung der Aufgabe ergibt sich durch die kennzeichnenden Merkmale des Anspruchs 1.

Der Vorteil der Erfindung liegt insbesondere darin, daß das bereits in vielen Fernmeldeanlagen implementierte Verfahren, ausschließlich der Decodierung, mit einbezogen wird und ein mit Sprachsignalen überlagertes Mehrfrequenzzeichen noch innerhalb einer vorgegebenen, zum Beispiel von internationalen Organisationen standardisierten Zeitspanne, erkannt werden kann.

Eine vorteilhafte Weiterbildung sieht vor, daß die Anzahl der Integrationsintervalle und der Beginn des vorgegebenen Wertebereiches, den die intergrierten Ausgangssignale der Frequenzdetektoren durchlaufen, auf die erforderliche Erkennungszeit abgestimmt ist. Unter Berücksichtigung der Merkmale des Anspruchs 5 kann somit auf unterschiedliche Erkennungszeiten bei unterschiedlichen Verarbeitungs-Zeitintervallen des bekannten Ver fahrens abgestimmt werden.

Im folgenden wird ein Ausführungsbeispiel der Erfindung anhand der Zeichnung näher erläutert. Dabei zeigen

FIG 1 ein Blockschaltbild einer Einrichtung zur Erkennung von Mehrfrequenzcodesignalen mit überlagerten Störsignalen

FIG 2A ein Spannungswertdiagramm für einen Beobachtungszeitraum zur Erläuterung der Funktion der Integrator-und Begrenzerstufe nach FIG 1

FIG 2B ein Impulsdiagramm für einen Beobachtungszeitraum zur Erläuterung der Markierungsimpulsstufe nach FIG 1

FIG 2C ein Impulsdiagramm für einen Beobachtungszeitraum zur Erläuterung der ZeichenendeerkennungsEinrichtung nach FIG 1 und

FIG 3 ein Flußdiagramm für eine Realisierung in einem Rechnersystem.

Für das Ausführungsbeispiel wurde hinsichtlich der Codierung der Mehrfrequenzsignale ein in Fernmeldenetzen häufig verwendeter $2^x$ (1 aus 4) - Code zugrundegelegt. Die sich aus dieser Codierung ergebenden acht Ausgänge der nicht dargestellten Mehrfrequenzempfangsschaltung werden über die Eingänge E1 bis E8 jeweils mit einer Integrator-und Begrenzerstufe IBS1 bis IBS8 verbunden. Die Ausgangssignale IS dieser Stufen gelangen jeweils an eine Markierungsimpulsstufe MIS1 bis MIS8, deren Ausgangssignale MI sowohl einer Prüf-und Decodiereinrichtung PDE als auch einer Zeichendeerkennungs-Einrichtung ZEE zugeführt werden. Über den Ausgang der Prüf-und Decodiereinrichtung PDE gelangt das jeweils erkannte Mehrfrequenzzeichen an die Zeichenendeerken nungs-Einrichtung ZEE und an die weiterverarbeitenden Einrichtungen. Der Ausgang A2 der Zeichenendeerkennungs-Einrichtung ZEE gibt den Zeitpunkt des Zeichenendes des erkannten Zeichens sowohl an wiederum eine weiterverarbeitende Einrichtung als auch an alle Integrator-und Begrenzerstufen IBS1 bis IBS8 und Markierungsimpulsstufen MIS1 bis MIS8 weiter. Der durch das Verarbeitungs-Zeitintervall der vorhergehenden Schaltungsanordnung bestimmte Takt T1 wird allen Integrator-und Begrenzerstufen IBS1 bis IBS8 sowie allen Markierungsimpulsstufen MIS1 bis MIS8 sowie an die Prüf-und Decodiereinrichtung PDE und an die Zeichenendeerkennungs-Einrichtung ZEE zugeführt.

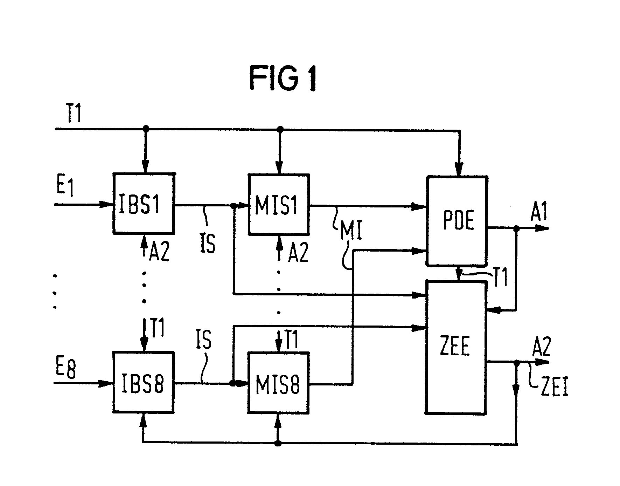

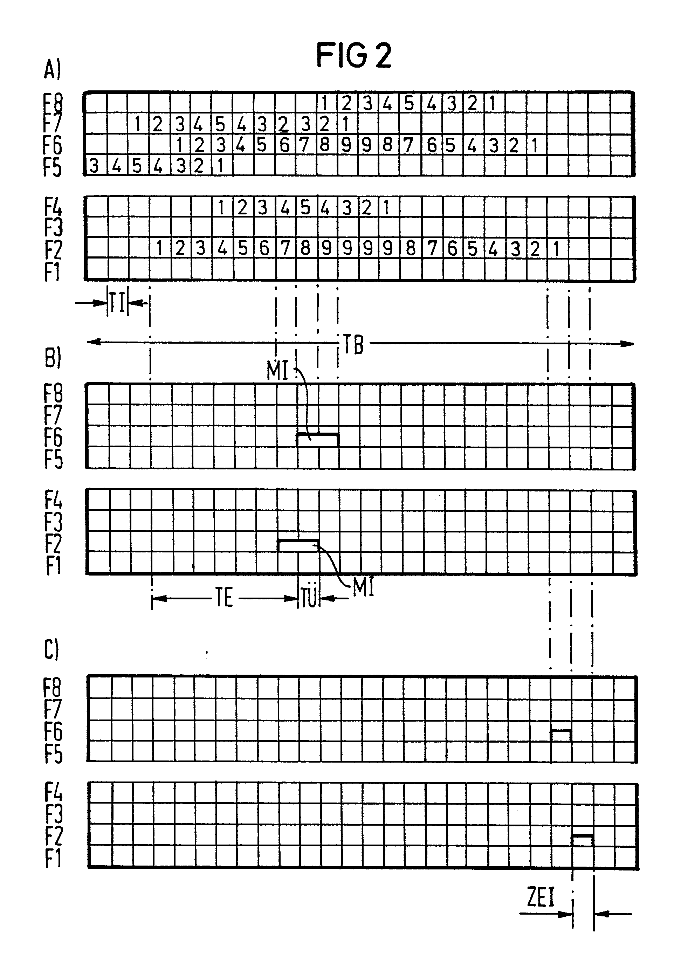

Die in FIG 2A bis FIG 2C gezeigten Diagramme dienen der Erläuterung der Funktion der im Ausführungsbeispiel nach FIG 1 dargestellten Funktionseinheiten. FIG 2A zeigt die Funktion der Integrator-und Begrenzerstufen IBS1 bis IBS8 anhand von Zeitdiagrammen, wobei ein Zeitintervall TI der zugeführten Taktfrequenz T1 entspricht und jeder Frequenz der $2 \times (1$ aus $4)$ -codierten Mehrfrequenzsignale eine Zeitachse zugeordnet ist. Die von der Mehrfrequenzempfangsschaltung ankommenden Signale werden in den Zeitintervallen TI digital integriert, wobei die integrierten Signale, in FIG 1 mit IS gekennzeichnet, zehn unterschiedliche Spannungswerte aufweisen können und auf einen oberen bzw. unteren Spannungswert begrenzt werden. Die Zahlenwerte in FIG 2A geben beispielhaft die Spannungswerte der acht integrierten Signale IS (siehe FIG 1) innerhalb eines Beobachtungszeitraums TB an. Die in FIG 2A aufgeführten Spannungswerte stellen ein Beispiel für den Empfang eines Mehrfrequenzzeichens mit den Einzelfrequenzen F2 und F6 mit überlagerten Sprachsignalen in den Frequenzbereichen F4, F5, F7 und F8 dar. Die acht integrierten Signale IS werden jeweils einer Markierungsimpulsstufe MIS1 bis MIS8 (siehe FIG 1) zugeführt, deren Funktion FIG 2B aufzeigt. Diese Stufe erzeugt jeweils einen Markierungsimpuls MI (siehe auch FIG 1) über diejenigen Zeitintervalle TI, in denen die integrierte Spannung IS die den Spannungswerten 7 und 8 zugeordneten Spannungsbereiche durchläuft. Der Markierungsimpuls MI entsteht nur bei steigenden integrierten Spannungswerten. Die Anzahl der Zeitintervalle, die vom Auftreten des Spannungswertes 1 bis zur Abgabe eines Markierungsimpulses MI verstreicht sowie der Spannungsbereich, ab dem der Markierungsimpuls MI erzeugt wird, bestimmen die Erkennungszeit TE einer Frequenz eines Mehrfrequenzzeichens. Die Erkennungszeit TE, zum Beispiel 40 ms, kann an die Forderungen unterschiedlicher Fernmeldenetze durch Verändern der beiden Komponenten, wie vorher erlätert, angepaßt werden. Die Markierungsimpulse MI gelangen an eine Prüf-und Decodiereinrichtung PDE (siehe FIG 1), in der eine Auswertung der Impulse stattfindet. Die Prüf-und Decodiereinrichtung PDE prüft, ob Markierungsimpulse (MI) in jeweils einer Frequenzgruppe in wenigstens einem Zeitintervall TÜ gleichzeitig vorliegen, da Frequenzsignale, die einem Mehrfrequenzsignal zugeordnet sind, einer gemeinsamen Quelle entstammen und daher mit geringer zeitlicher Verzögerung empfangen werden kann. Die maximal zulässige zeitliche Verzögerung wird durch die Markierungsimpulsbreite und damit durch die Größe des Spannungsbereiches, den die integrierten Signale IS durchlaufen, bestimmt. Liegen Markierungsimpulse MI innerhalb eines Zeitintervalls TÜ vor, wird die Impulskombination auf ihre Übereinstimmung mit einer ursprünglich codierten Mehrfrequenzkombination untersucht. Entspricht die Frequenzkombination einer gültigen $2 \times 1$ (1 aus 4) -codierten Mehrfrequenzkombination, wird das erkannte und somit decodierte Mehrfrequenzzeichen über den Ausgang A1 (siehe FIG 1) an eine weiterverarbeitende Einrichtung weitergeleitet. Bevor ein weiteres Zeichen empfangen werden kann, muß das Ende des aktuellen Mehrfrequenzzeichens in einer Zeichenendeerkennungs-Einrichtung ZEE festgestellt werden. Diese Zeichenendeerkennungs-Einrichtung ZEE stellt aufgrund der ihr zugefäührten und in FIG 2A dargestellten Signale und der zugeführten Signale des Ausgangs A1 der Prüf-und Decodiereinrichtung PDE das Erreichen des Spannungswertes 1 der für das erkannte Mehrfrequenzzeichens relevanten integrierten Signale IS (siehe FIG 2 und FIG 2C) fest und erzeugt jeweils einen Impuls, wobei der zuletzt erzeugte Impuls als Zeichenendeimpuls ZEI festgelegt wird.

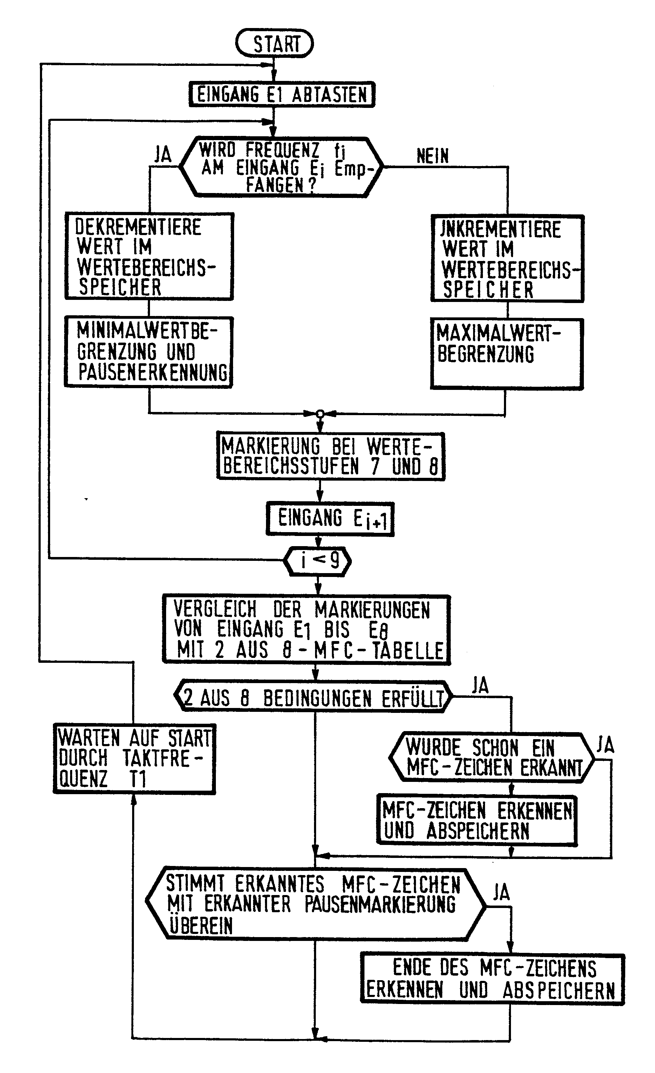

FIG 3 zeigt beispielhaft ein Flußdiagramm für eine Realisierung des erfindungsgemäßen Verfahrens in einem Ein-Chip-Rechnersystem, z. B. Ein-Chip-Rechnersystem 8051 der Fa. Intel.

Bezugszeichenliste

IBS 1...IBS8 Integrator-und Begrenzerstufe 1...8 E1...8 Eingänge der Integrator-und Begrenserstufe 1...8

IS Integrierte Signale

MIS1...MIS8 Markierungsimpulsstufe 1...8

MIS Markierungsimpuls

PDE Prüf-und Decodiereinrichtung

A1 Ausgang der Prüf-und Decodiereinrichtung

ZEE Zeichenendeerkennungs-Einrichtung

A2 Ausgang der Zeichenendeerkennungseinrichtung

ZEI Zeichenendeimpuls

T1 Taktfrequenz

TI Zeitinterval

TE Erkennungszeit

TÜ Überwachungs-Zeitintervall

F1...F8 Einzelfrequenzen 1...8

## Ansprüche

1. Verfahren zur Erkennung von Mehrfrequenzcodesignalen mit überlagerten Störsignalen, bei dem die in eine Fernmeldeanlage eingehenden, digitalisierten Mehrfrequenzsignnale mittels digitaler Filter entsprechend der Codierung in unterschiedliche Frequenzsignale getrennt werden und nachgeschaltete Frequenzdetektoren das Vorliegen von Frequenzsignalen feststellen, **dadurch gezeichnet**, daß jeweils die Ausgangssignale der Frequenzdetektoren digital integriert und sowohl auf einen Maximal-als auch auf einen Minimalwert begrenzt werden, daß beim Durchlaufen der integrierten Ausgangssignale der Frequenzdetektoren durch einen definierten Wertebereich wenigstens ein Markierungsimpuls gebildet wird, daß die von wenigstens zwei Frequenzsignalen abgeleiteten Markierungsimpulse auf ihr gleichzeitiges Auftreten innerhalb wenigstens eines Zeitintervalles geprüft werden, daß die durch die Markierungsimpulse vorgegebene Frequenzkombination hinsichtlich ihrer Übereinstimmung mit einer entsprechend codierten Mehrfrequenzkombination überprüft wird und daß der Zeitpunkt, an dem alle die einer erkannten Mehrfrequenzkombination zugeordneten integrierten Ausgangssignale der Frequenzdetektoren einen vorgegebenen Wert unterschreiten, als Zeichenende erkannt wird.

2. Verfahren nach Anspruch 1, **dadurch gekennzeichnet**, daß der definierte Wertebereich, den die integrierten Ausgangssignale der Frequenzdetektoren durchlaufen, durch einen vorgegebenen Spannungsbereich gebildet ist.

3. Verfahren nach Anspruch 1 oder 2, **dadurch gekennzeichnet**, daß die Anzahl der Integrations-Zeitintervalle und der Beginn des vorgegebenen Wertebereiches, den die integrierte Ausgangssignale der Frequenzdetektoren durchläuft, auf die erforderliche Erkennungszeit eines Mehrfrequenzzeichens abgestimmt sind.

4. Verfahren nach einem der vorhergehenden Ansprüche **dadurch gekennzeichnet**. daß die Größe des Wertebereichs, den die integrierten Ausgangssignale der Frequenzdetektoren durchlaufen, auf die maximal zulässige Zeitverschiebung der Frequenzsignale eines Mehrfrequenzzeichens abgestimmt ist.

5. Verfahren nach einem der vorhergehenden Ansprüche **dadurch gekennzeichnet**. daß die Integrations-Zeitintervalle und die Verarbeitungs-Zeitintervalle der vorgeschalteten Filter aufeinander abgestimmt sind.

6. Verfahren nach einem der vorhergehenden Ansprüche, **dadurch gekennzeichnet**, daß die Mehrfrequenzkombination durch eines Auswahl von mindestens zwei Frequenzen aus mehreren Frequenzen oder mindestens zwei Frequenzgruppen gebildet wird.

## FIG 1

# FIG 2

```
                    ┌─────────┐
                    │  START  │
                    └─────────┘
                         │
              ┌──────────────────────┐
              │ EINGANG E1 ABTASTEN   │
              └──────────────────────┘
                         │
        JA  ╱────────────────────────╲  NEIN
      ┌────◄   WIRD FREQUENZ fj       ►────┐
      │     ╲  AM EINGANG Ei Emp-     ╱    │
      │      ╲    FANGEN ?           ╱     │
      │                                    │
┌─────────────────┐              ┌─────────────────┐
│ DEKREMENTIERE    │              │ JNKREMENTIERE    │
│ WERT IM          │              │ WERT IM          │
│ WERTEBEREICHS-   │              │ WERTEBEREICHS-   │
│ SPEICHER         │              │ SPEICHER         │
└─────────────────┘              └─────────────────┘
┌─────────────────┐              ┌─────────────────┐
│ MINIMALWERTBE-   │              │ MAXIMALWERT-     │
│ GRENZUNG UND     │              │ BEGRENZUNG       │
│ PAUSENERKENNUNG  │              │                  │
└─────────────────┘              └─────────────────┘
              │                         │
              └────────────┬────────────┘
                  ┌─────────────────────────┐
                  │ MARKIERUNG BEI WERTE-    │
                  │ BEREICHSSTUFEN 7 UND 8   │
                  └─────────────────────────┘
                           │
                  ┌─────────────────┐
                  │ EINGANG Ei+1     │
                  └─────────────────┘
                           │
                       ╱ i < 9 ╲
                       ╲       ╱
                           │
              ┌───────────────────────────────┐
              │ VERGLEICH DER MARKIERUNGEN     │
              │ VON EINGANG E1 BIS E8          │
              │ MIT 2 AUS 8 - MFC - TABELLE    │
              └───────────────────────────────┘
                           │
                  ╱ 2 AUS 8 BEDINGUNGEN ERFÜLLT ╲  JA
                  ╲                              ╱───┐
                           │
┌─────────────────┐      ╱ WURDE SCHON EIN    ╲  JA
│ WARTEN AUF START │      ╲ MFC-ZEICHEN ERKANNT╱───┐
│ DURCH TAKTFRE-   │               │
│ QUENZ  T1        │      ┌────────────────────┐
└─────────────────┘      │ MFC-ZEICHEN ERKENNEN│
                         │ UND ABSPEICHERN     │
                         └────────────────────┘
                           │
            ╱ STIMMT ERKANNTES MFC-ZEICHEN  ╲  JA
            ╲ MIT ERKANNTER PAUSENMARKIERUNG ╱───┐
            ╲ ÜBEREIN                       ╱
                           │
                  ┌──────────────────────────┐
                  │ ENDE DES MFC-ZEICHENS     │
                  │ ERKENNEN UND ABSPEICHERN  │
                  └──────────────────────────┘
```